# EUROPÄISCHE PATENTSCHRIFT

(11) **EP 1 070 324 B1**
(45) Veröffentlichungstag und Bekanntmachung des Hinweises auf die Patenterteilung: **03.07.2002**
(21) Anmeldenummer: 99916769.5
(22) Anmeldetag: 01.03.1999
(51) Int. Cl.: G21C 19/307

(54) **NUKLEARE KRAFTWERKSANLAGE MIT EINER BEGASUNGSVORRICHTUNG FÜR EIN KÜHLMEDIUM**
NUCLEAR POWER STATION WITH GAS INJECTION DEVICE FOR A COOLANT
CENTRALE NUCLEAIRE COMPORTANT UN DISPOSITIF D'INTRODUCTION DE GAZ DESTINE A UN CALOPORTEUR

(30) Priorität: 13.03.1998 DE 19810963
(43) Veröffentlichungstag der Anmeldung: 24.01.2001
(73) Patentinhaber: Framatome ANP GmbH, 91050 Erlangen (DE)
(72) Erfinder: PUTHAWALA, Anwer, D-91054 Buckenhof (DE)
(74) Vertreter: Tergau & Pohl Patentanwälte
(86) Internationale Anmeldenummer: DE9900541
(87) Internationale Veröffentlichungsnummer: WO9948106

(56) Entgegenhaltungen:
- EP-A- 0 426 453
- DE-A- 19 602 213
- DE-C- 3 105 168
- JP-A- 62 150 198
- SE-B- 461 818
- US-A- 5 398 269
- US-A- 5 467 375

## Beschreibung

Die Erfindung betrifft eine nukleare Kraftwerksanlage mit einer für ein Kühlmedium vorgesehenen Begasungsvorrichtung.

In einer nuklearen Kraftwerksanlage ist üblicherweise ein Speisewasser-Dampf-Kreislauf vorgesehen. Dieser kann als Kühlkreislauf zur Kühlung des Reaktorkerns dienen. Das im Kühlkreislauf vorgesehene Kühlmedium hängt dabei vom Reaktortyp ab und kann insbesondere bei einem Druckwasserreaktor oder Siedewasserreaktor Wasser sein.

Um einer radiolytischen Zersetzung des im Speisewasser-Dampf-Kreislauf strömenden Kühlmediums entgegenzuwirken, ist üblicherweise eine Begasung des Kühlmediums mit Wasserstoff vorgesehen. Zu diesem Zweck ist beispielsweise aus dem Buch "VGB-Kernkraftwerks-Seminar 1970", insbesondere Seite 41, für einen Druckwasserreaktor ein Volumenregelsystem bekannt, das zum Einspeisen von Chemikalien, insbesondere von Wasserstoff, in den Speisewasser-Dampf-Kreislauf des Kernreaktors geeignet ist.

Bei dem bekannten System wird der Wasserstoff in einen zum Volumenregelsystem gehörenden Volumenausgleichsbehälter eingegeben. Im Volumenausgleichsbehälter liegt der eingegebene Wasserstoff als Bestandteil eines Gaspolsters über dem Flüssigkeitspegel des Kühlmediums vor. Der Wasserstoff-Partialdruck im Gaspolster wird dabei entsprechend der gewünschten Konzentration des Wasserstoffs im Kühlmedium eingestellt.

Eine Weiterentwicklung des beschriebenen Systems ist aus der Patentschrift DE 19 60 22 13 bekannt. Die Wasserstoffbegasung des Kühlmediums erfolgt bei dem in dieser Druckschrift beschriebenen Einspeisesystem durch einen am Speisewasser-Dampf-Kreislauf angeordneten Wasserstoffgenerator. Der Wasserstoffgenerator ist dabei eine Elektrolysevorrichtung, wie sie z.B. aus Hütte: "Die Grundlagen der Ingenieurwissenschaften", Springer (1996), Seite B167f, bekannt ist.

Weiterhin ist aus DE 195 36 450 C1 ein Kernreaktor bekannt, bei dessen Betrieb dem Kühlmittel Wasserstoff zugesetzt wird. Die Zugabe von Wasserstoff erfolgt dabei in Abhängigkeit vom Wasserstoffgehalt des Kühlmittels, der mittels einer Meßeinrichtung auf der Druckseite einer Hochdruckpumpe kontinuierlich gemessen wird.

Diese Systeme weisen jedoch einen erheblichen Wartungs- und Reparaturaufwand auf. Außerdem treten im Speisewasser-Dampf-Kreislauf bestimmte Stellen mit einer erhöhten Konzentration des Wasserstoffs auf, da eine ausreichend homogene Verteilung des Wasserstoffs im Kühlmedium nicht gewährleistet ist.

Der Erfindung liegt daher die Aufgabe zugrunde, eine nukleare Kraftwerksanlage mit einem Speisewasser-Dampf-Kreislauf anzugeben, bei der die für eine Begasung des Kühlmediums mit Wasserstoff vorgesehene Begasungsvorrichtung einen besonders geringen Wartungs- und Reparaturaufwand aufweist und bei der eine besonders homogene Verteilung des Wasserstoffs gewährleistet ist.

Diese Aufgabe wird erfindungsgemäß gelöst, indem der Speisewasser-Dampf-Kreislauf eine Kondensatreinigungseinrichtung und eine dem Reaktordruckbehälter vorgeschaltete Speisewasserpumpe umfaßt und der Speisewasser-Dampf-Kreislauf eine Zweigleitung aufweist, in die eine Begasungsvorrichtung zur Begasung von Kühlmedium mit Wasserstoff geschaltet ist, wobei die Zweigleitung unmittelbar nach der Kondensatreinigungseinrichtung vom Speisewasser-Dampf-Kreislauf abzweigt und unmittelbar vor der Speisewasserpumpe in den Speisewasser-Dampf-Kreislauf mündet.

Unter "unmittelbar" ist dabei zu verstehen, daß die Abzweigestelle der Kondensatreinigungseinrichtung ohne Zwischenschaltung weiterer (aktiver) Komponenten nachgeschaltet bzw. die Einmündungsstelle der Speisewasserpumpe, deren Ansaugstutzen oder, bei einer Mehrzahl parallel geschalteter Speisewasserpumpen, deren gemeinsamer Saugleitung ohne Zwischenschaltung weiterer (aktiver) Komponenten vorgeschaltet ist.

Die Erfindung geht dabei von der Überlegung aus, daß der für die Begasungsvorrichtung erforderliche Wartungs- und Reparaturaufwand auch aufgrund von Verunreinigungen des Kühlmediums besonders hoch sein kann. Um derartige Ursachen zu vermeiden, sollten Verunreinigungen des Kühlmediums nicht in die Begasungsvorrichtung gelangen können. Deswegen sollte die Begasungsvorrichtung an einer Stelle des Kühlkreislaufs angeordnet sein, bei der das Kühlmedium eine besonders hohe Reinheit aufweist. Außerdem sollten bestehende Druckverhältnisse an bestimmten Stellen des Kühlkreislaufs ausgenutzt werden, um den Einbau zusätzlicher Komponenten wie beispielsweise Pumpen, zu vermeiden.

Eine besonders homogene Verteilung des Wasserstoffs im Kühlmedium sollte durch eine Pumpe gewährleistet sein, die eine Druckerhöhung im Kühlmedium bewirkt. Um dabei den technischen Aufwand besonders gering zu halten, sollte hierfür eine ohnehin im Speisewasser-Dampf-Kreislauf vorgesehene Pumpe verwendet werden. Um die genannten Bedingungen gleichzeitig zu erfüllen, ist der Begasungsvorrichtung eingangsseitig eine in die Kondensatleitung geschaltete Kondensatreinigung vorgeschaltet und ausgangsseitig eine dem Reaktordruckbehälter vorgeschaltete Speisewasserpumpe nachgeschaltet.

Zweckmäßigerweise weist die Begasungsvorrichtung eine Elektrolysevorrichtung (Elektrolyseur) zur Zersetzung von Wasser in Wasserstoff und Sauerstoff auf. Durch Variation eines durch das Wasser geleiteten elektrischen Stromes ist dabei die Produktion des Wasserstoffes in besonders einfacher Weise steuerbar.

Die Elektrolyseeinheit umfaßt vorteilhafterweise eine Anzahl von Membranelektrolysezellen. Bei einer derartigen Membranelektrolysezelle wird das Funktionsprinzip einer Brennstoffzelle, wie sie beispielsweise aus dem Aufsatz "Brennstoffzellen für Elektrotraktion", K. Straszer, VDI-Berichte, Nr. 912 (1992), S. 125 ff, bekannt ist, umgekehrt. Dazu wird einer zwischen einer Anode und einer Kathode angeordneten Membran Wasser zugeführt. Durch Anlegen einer Versorgungsspannung zwischen der Anode und der Kathode wird das Wasser elektrolytisch in Wasserstoff und Sauerstoff zersetzt. Eine derartige Membranelektrolysezelle zeichnet sich durch eine besonders kompakte Bauweise aus, so daß eine Elektrolyseeinheit mit einer Anzahl von Membranelektrolysezellen auf besonders engem Raum untergebracht sein kann. Daher kann eine derartige Elektrolyseeinheit besonders flexibel und an die spezifischen Bedürfnisse des Kühlkreislaufs angepaßt in den Speisewasser-Dampf-Kreislauf geschaltet sein.

Der Begasungsvorrichtung ist vorteilhafterweise eine Druck-Regeleinheit zugeordnet, die auf der Wasserstoff-Seite der Begasungsvorrichtung einen im Vergleich zur Sauerstoff-Seite der Begasungsvorrichtung niedrigeren Druck aufrechterhält. Damit ist besonders zuverlässig verhindert, daß Wasserstoff durch die Membrane der Membranelektrolysezellen auf die Sauerstoff-Seite gelangen kann.

Vorteilhafterweise ist der in der Elektrolyseeinheit erzeugte Sauerstoff einem Abgassystem zuführbar. Handelt es sich bei dem Abgassystem um eines, das dem Kühlmittelkreislauf zugeordnet ist, so kann der Sauerstoff dort eine Rekombination von überschüssigem Wasserstoff gewährleisten.

In einer weiteren vorteilhaften Ausgestaltung der Erfindung weist die nukleare Kraftwerksanlage einen für Siedewasser vorgesehenen Reaktordruckbehälter auf.

Die mit der Erfindung erzielten Vorteile bestehen insbesondere darin, daß durch die am Speisewasser-Dampf-Kreislauf angeordnete Begasungsvorrichtung der dem Kühlmedium zuzuführende Wasserstoff in unmittelbarer Nähe seiner Einspeisung in den Speisewasser-Dampf-Kreislauf herstellbar ist. Eine besonders homogene Verteilung des in der Begasungsvorrichtung erzeugten Wasserstoffs ist dabei durch die ohnehin im Speisewasser-Dampf-Kreislauf vorhandene Speisewasserpumpe gewährleistet, die eine Druckerhöhung im Kühlmedium bewirkt. Somit weist die Begasungsvorrichtung einen besonders geringen Platzbedarf auf und kann bei Kompaktbauweise (Module) im Maschinenhaus mit besonders kurzer Montagezeit aufgestellt werden. Außerdem ist ein besonders geringer Wartungs- und Reparaturaufwand der Begasungsvorrichtung dadurch gewährleistet, daß der Begasungsvorrichtung ausschließlich gereinigtes kondensiertes Kühlmedium zugeführt wird.

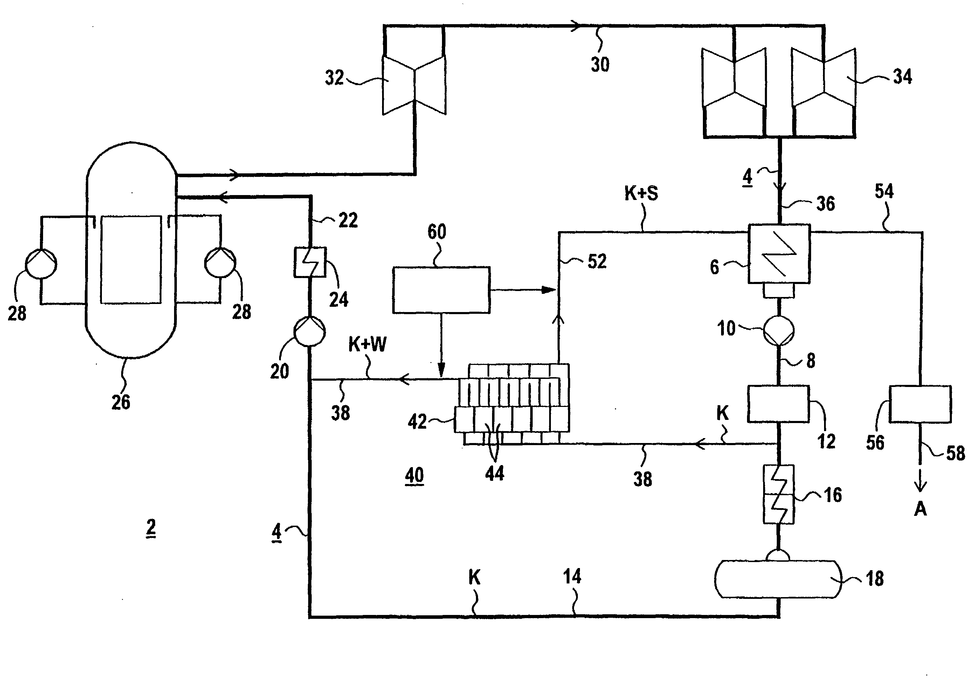

Ein Ausführungsbeispiel der Erfindung wird anhand einer Zeichnung näher erläutert. Darin zeigt die Figur schematisch eine nukleare Kraftwerksanlage mit einer für ein Kühlmedium vorgesehenen Begasungsvorrichtung.

Die als Siedewasserreaktor-Anlage ausgebildete nukleare Kraftwerksanlage 2 umfaßt als Kühlkreislauf einen Speisewasser-Dampf-Kreislauf 4 mit einem Kondensator 6. Zur Reinigung des den Kondensator 6 verlassenden Wasser oder Kühlmediums K ist dem Kondensator 6 ausgangsseitig über eine Kondensatleitung 8, in die eine Kondensatpumpe 10 geschaltet ist, eine Kondensatreinigungseinrichtung 12 nachgeschaltet. Im Speisewasser-Dampf-Kreislauf 4 ist die Kondensatreinigungseinrichtung 12 über eine Leitung 14, in die ein Niederdruckvorwärmer 16 und ein Speisewasserbehälter 18 geschaltet sind, mit einer Speisewasserpumpe 20 verbunden. Diese ist ausgangsseitig über eine Leitung 22, in die ein Hochdruckvorwärmer 24 geschaltet ist, mit einem für Siedewasser vorgesehenen Reaktordruckbehälter 26 verbunden. Für die Umwälzung des sich im Reaktordruckbehälter 26 befindlichen Kühlmediums K sind zwei Umwälzpumpen 28 vorgesehen. Zur arbeitsleistenden Entspannung des im Reaktordruckbehälter 26 entstandenen Dampfes des Kühlmediums K ist diesem über eine Leitung 30 eine Hochdruckturbine 32 und eine Niederdruckturbine 34 nachgeschaltet. Die Niederdruckturbine 34 ist ausgangsseitig über eine Leitung 36 an den Kondensator 6 angeschlossen, so daß ein geschlossener Speisewasser-Dampf-Kreislauf 4 entsteht.

Um einer radiolytischen Zersetzung des Kühlmediums K im Reaktordruckbehälter 26 entgegenzuwirken, weist der Speisewasser-Dampf-Kreislauf 4 eine Zweigleitung 38 auf, in die eine Begasungsvorrichtung 40 geschaltet ist. Die Begasungsvorrichtung 40 umfaßt eine Elektrolyseeinheit 42, die als Membranelektrolyseur ausgebildet ist. Diese umfaßt eine Anzahl von Membranelektrolysezellen 44, bei denen eine zwischen zwei Elektroden angeordnete Membran als fester Elektrolyt wirkt. Die Wasserstoffproduktion eines derartigen Elektrolyseurs ist durch Variation des zugeführten elektrischen Stromes besonders einfach kontrollierbar. Eine derartige Elektrolyseeinheit 42 ist beispielsweise aus der Druckschrift WO 97/36827 bekannt.

Damit die Begasungsvorrichtung 40 einen besonders geringen Wartungs- und Reparaturaufwand aufweist, ist sie in die Zweigleitung 38 geschaltet, die ausgangsseitig unmittelbar nach der Kondensatreinigungseinrichtung 12 vom Speisewasser-Dampf-Kreislauf 4 abzweigt. Für eine besonders homogene Verteilung des in der Begasungsvorrichtung 40 erzeugten Wasserstoffs W ist die Begasungsvorrichtung 40 ausgangsseitig über die Zweigleitung 38 mit der Speisewasserpumpe 20 unmittelbar verbunden. Der in der Begasungsvorrichtung 40 erzeugte Sauerstoff S ist über eine Teilleitung 52 dem Kondensator 6 zuführbar. Der Kondensator 6 ist zusätzlich über eine Abgasleitung 54 an ein Abgassystem 56 angeschlossen, das zum Abführen von Abgasen A über einen Schornstein 58 mit der Umwelt verbunden ist.

Um zu vermeiden, daß durch die Membrane der Membranelektrolysezellen Wasserstoff W auf die Sauerstoff-Seite gelangen kann, umfaßt die Begasungsvorrichtung 40 eine Druck-Regeleinheit 60. Diese stellt sicher, daß, ausgangsseitig von der Begasungsvorrichtung 40 aus gesehen, in der Teilleitung 52 ein vergleichsweise höherer Druck als in der Zweigleitung 38 herrscht. Hierzu wirkt die Druck-Regeleinheit 60 mit geeigneten Mitteln, beispielsweise elektrische oder mittels Drosseleinrichtungen, auf die Teilleitung 52 und die der Begasungsvorrichtung 40 nachgeschaltete Zweigleitung 38 ein.

Beim Betrieb der nuklearen Kraftwerksanlage 2 ist zur Verhinderung einer radiolytischen Zersetzung des Kühlmediums K eine Begasung des Wassers oder Kühlmediums K mit Wasserstoff W vorgesehen. Hierfür wird die Kondensatreinigungseinrichtung 12 verlassendes Kühlmedium K mit einer Reinheit von weniger als 1 µS/cm über die Zweigleitung 38 der Begasungsvorrichtung 40 zugeführt. Der in den Membranelektrolysezellen 44 erzeugte Wasserstoff W wird für eine besonders homogene Verteilung des Wasserstoffs W im Speisewasser-Dampf-Kreislauf 4 eingangsseitig vor der Speisewasserpumpe 20 in den Speisewasser-Dampf-Kreislauf 4 eingespeist. Der in der Begasungsvorrichtung 40 zusätzlich erzeugte Sauerstoff S wird über die Leitung dem Abgassystem zugeführt, um dort eine Rekombination von überschüssigem Wasserstoff W herbeizuführen.

Die als Siedewasserreaktor ausgebildete nukleare Kraftwerksanlage 2 weist zur Vermeidung von Korrosion ("integranular stress corrosion cracking IGSCC) im Reaktor-Druckbehälter 26 eine Begasungsvorrichtung 40 zur Begasung des im Speisewasser-Dampf-Kreislauf 4 geführten Kühlmediums K mit Wasserstoff W auf. Durch die besonders hohe Reinheit des der Begasungsvorrichtung 40 zugeführten Kühlmediums K weist diese einen besonders geringen Wartungs- und Reparaturaufwand auf. Außerdem gewährleistet die Einspeisung des Wasserstoffs W vor der Speisewasserpumpe 20 eine besonders homogene Verteilung des Wasserstoffs W im Speisewasser-Dampf-Kreislauf 4.

## Patentansprüche

1. Nukleare Kraftwerksanlage (2) mit einem eine Kondensatreinigungseinrichtung (12) und eine dem Reaktordruckbehälter (26) vorgeschaltete Speisewasserpumpe (20) umfassenden Speisewasser-Dampf-Kreislauf (4), der eine Zweigleitung (38) aufweist, in die eine Begasungsvorrichtung (40) zur Begasung von Kühlmedium (K) mit Wasserstoff (W) geschaltet ist, **dadurch gekennzeichnet, daß** die Zweigleitung (38) unmittelbar nach der Kondensatreinigungseinrichtung (12) vom Speisewasser-Dampf-Kreislauf (4) abzweigt und unmittelbar vor der Speisewasserpumpe (20) in den Speisewasser-Dampf-Kreislauf (4) mündet.

2. Nukleare Kraftwerksanlage (2) nach Anspruch 1,
bei der die Begasungsvorrichtung (40) eine Elektrolyseeinheit (42) zur Zersetzung einer Teilmenge des dort geführten Wassers in Wasserstoff (W) und Sauerstoff (S) aufweist.

3. Nukleare Kraftwerksanlage (2) nach Anspruch 2,
bei der die Elektrolyseeinheit (42) eine Anzahl von Membranelektrolysezellen (44) umfaßt.

4. Nukleare Kraftwerksanlage (2) nach einem der Ansprüche 1 bis 3,
bei der die Begasungsvorrichtung (40) eine Druck-Regeleinheit (60) aufweist, die auf der Wasserstoff-Seite der Begasungsvorrichtung (40) einen im Vergleich zur Sauerstoff-Seite der Begasungsvorrichtung (40) niedrigeren Druck aufrecht erhält.

5. Nukleare Kraftwerksanlage (2) nach einem der Ansprüche 2 bis 4,
bei der der in der Elektrolyseeinheit (42) erzeugte Sauerstoff (S) einem Abgassystem (56) zuführbar ist.

6. Nukleare Kraftwerksanlage (2) nach einem der Ansprüche 1 bis 5,
die einen für Siedewasser vorgesehenen Reaktordruckbehälter (26) aufweist.

## Claims

1. Nuclear power station (2) having a feed-water steam circuit (4) which comprises a condensate-cleaning facility (12) and a feed-water pump (20) connected upstream of the reactor pressure vessel (26) and which has a branch line (38) to which a gas-injection device (40) is connected for injecting coolant (K) with hydrogen (W), **characterized in that** the branch line (38) branches off from the feed-water steam circuit (4) directly downstream of the condensate-cleaning facility (12) and runs into the feed-water steam circuit (4) directly upstream of the feed-water pump (20).

2. Nuclear power station (2) according to claim 1, wherein the gas-injection device (40) has an electrolytic unit (42) for decomposing a partial quantity of the water that is directed there into hydrogen (W) and oxygen (S).

3. Nuclear power station (2) according to claim 2, wherein the electrolytic unit (42) comprises a number of electrolytic membrane cells (44).

4. Nuclear power station (2) according to one of claims 1 to 3, wherein the gas-injection device (40) has a pressure-control unit (60) which on the hydrogen side of the gas-injection device (40) maintains a pressure that is lower than that on the oxygen side of the gas-injection device (40).

5. Nuclear power station (2) according to one of claims 2 to 4, wherein the oxygen (S) that is generated in the electrolytic unit (42) can be supplied to a waste-gas system (56).

6. Nuclear power station (2) according to one of claims 1 to 5, which has a reactor pressure vessel (26) that is provided for boiling water.

## Revendications

1. Centrale (2) nucléaire ayant un circuit (4) eau d'alimentation-vapeur comprenant un dispositif (12) d'épuration du produit condensé et une pompe (20) d'eau d'alimentation montée en amont de la cuve (26) sous pression du réacteur, le circuit (4) comprenant un conduit (38) de dérivation, dans lequel est monté un dispositif (40) d'envoi de gaz, destiné à envoyer de l'hydrogène (W) dans du fluide (K) de refroidissement, **caractérisée en ce que** le conduit (38) de dérivation bifurque juste après le dispositif (12) d'épuration du produit condensé du circuit (4) eau d'alimentation-vapeur et débouche dans le circuit (4) eau d'alimentation-vapeur juste avant la pompe (20) d'eau d'alimentation.

2. Centrale (2) nucléaire suivant la revendication 1, dans laquelle le dispositif (40) d'envoi de gaz comporte une unité (42) d'électrolyse de décomposition d'une partie de l'eau qui y est envoyée en hydrogène (W) et en oxygène (S).

3. Centrale (2) nucléaire suivant la revendication 2,
dans laquelle l'unité (42) d'électrolyse comprend un certain nombre de cellules (44) d'électrolyse à membrane.

4. Centrale (2) nucléaire suivant l'une des revendications 1 à 3,
dans laquelle le dispositif (40) d'envoi de gaz a une unité (60) de régulation de la pression, qui maintient le dispositif (40) d'envoi de gaz à une pression plus basse du côté de l'hydrogène que du côté de l'oxygène.

5. Centrale (2) nucléaire suivant l'une des revendications 2 à 4,
dans laquelle l'oxygène (S) produit dans l'unité (42) d'électrolyse peut être envoyé à un système (56) d'évacuation des gaz.

6. Centrale (2) nucléaire suivant l'une des revendications 1 à 5, qui comporte une cuve (26) de réacteur sous pression prévue pour de l'eau bouillante.
